# EUROPEAN PATENT SPECIFICATION

(11) **EP 0 749 588 B1**
(45) Date of publication and mention of the grant of the patent: **15.04.1998**
(21) Application number: 95910234.4
(22) Date of filing: 09.02.1995
(51) Int. Cl.: G02B 6/44

(54) **A FRICTION FIT STRAIN RELIEF BOOT**
PRESSITZ ZUGENTLASTUNG
GAINE SERRE-CABLE A AJUSTEMENT SERRE

(30) Priority: 07.03.1994 US 207450
(43) Date of publication of application: 27.12.1996
(73) Proprietor: THE WHITAKER CORPORATION, Wilmington, Delaware 19808 (US)
(72) Inventor: PETERSON, Matthew, Alan, Elizabethtown, PA 17022 (US); CHRISTNER, Thomas, Lee, Middletown, PA 17057 (US); WERTMAN, Daniel, Erlin, Mechanicsburg, PA 17055 (US)
(74) Representative: Heinz-Schäfer, Marion
(86) International application number: PCT/US95/01734
(87) International publication number: WO 95/24668

(56) References cited:
- US-A- 4 834 487
- US-A- 4 930 856
- US-A- 5 030 135
- US-A- 5 094 552
- US-A- 5 202 942
- US-A- 5 363 459

## Description

The present invention relates to a strain relief boot for use with a cable and more particularly, to a strain relief boot which is removably retained on the cable by friction fit.

There is an effort under way in the industry to provide connectors for wiring that are approved by the Underwriters Laboratory. The connectors which are presently approved have strain relief boots which are secured to the cables by an epoxy adhesive.

Unfortunately, in the event of a fire, the epoxy adhesive burns with the production of noxious fumes. Furthermore, the use of an adhesive requires man hours to apply the adhesive and to assemble the system in addition to requiring curing time for the adhesive to harden. The cost of the adhesive is added to the labor costs. A further problem is that the epoxy adhesive produces an attachment which cannot be removed. U.S. Patent 4,930,856 discloses a strain relief boot adhered to a cable with epoxy.

The applicants are also aware of snap fits and threaded means for attaching strain relief boots to cables as in the following: U.S. Patent Nos. 4,813,760, 5,062,683, and 5,202,942.

U.S. Patent No. 5,202,942 to Collins, et al., discloses a strain relief boot comprising a generally tubular rigid forward portion 42 coaxial with and adjacent to a generally tubular flexible rearward portion 31 having a center bore therethrough. The rigid portion 42 has an inner wall surrounding a cable, the cable being slidingly disposed within the strain relief boot. Flexible finger elements 46 are deflected onto optical fiber cable jacket 24 upon crimping. The cable termination member 10 having cable 20 affixed thereto is then secured within connector housing 40 by tightening connector nut 42.

A need exists for a simple, easily manufactured strain relief boot which can be assembled rapidly, is cost effective, is removable and does not produce noxious fumes in the event of a fire.

It is an object of the present invention to provide a strain relief boot which can be assembled to a cable without the use of adhesive and which is removable. It is a further object of the present invention to provide a strain relief boot which can be molded inexpensively and which can be joined to a cable in a cost efficient manner.

In accordance with the teachings of the present invention, there is disclosed herein a strain relief boot for a cable as defined in claim 1. Said strain relief boot thus comprises a generally tubular body having a center bore therethrough. The body comprises a generally tubular rigid portion coaxial with and adjacent to a generally tubular flexible portion. The center bore of the body defines an inner wall that surrounds the cable. The cable is intended to be slidingly disposed within the center bore and the boot is characterized in that the rigid portion has a plurality of elongate ribs. The ribs are spaced apart circumferentially and protrude radially inwardly from the inner wall. Each rib extends along and is secured to the inner wall along the length of the rib so as to grip the cable with the friction fit and retain the boot on the cable.

An embodiment of the present invention will now be described by way of example with reference to the following drawings in which:

FIG. 1 is a perspective view showing the strain relief boot of the present invention attached to a cable.

FIG. 2 is a cross-sectional view taken along the lines 2-2 of FIG. 1.

FIG. 3 is a cross-sectional view taken along the lines 3-3 of FIG. 2, the cable not being shown.

FIG. 4 is a perspective view showing the cable received in the strain relief boot.

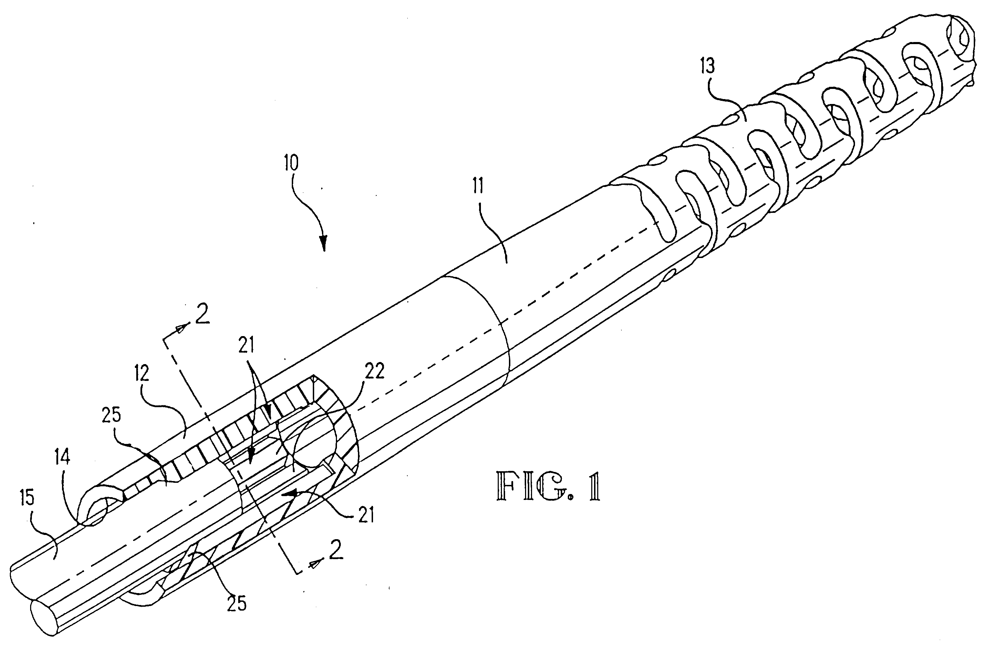

Referring to FIGS. 1-4 the strain relief boot 10 has a body 11 which further has a rigid portion 12 contiguous with a flexible portion 13. The flexible portion 13 may have a plurality of openings formed therein and may have a plurality of fluted or hinged segments or other means to provide flexibility. A center bore 14 is formed in the body 11 and extends throughout the length of the body. A cable 15 may be for electrical or optical use and the strain relief boot 10 provides mechanical support for the cable 15 to reduce the possibility of damage to the cable 15 or the inner cable 16. The cable 15 may have an eyelet or other portion which is slidingly received in the center bore 14 of the strain relief boot 10. The body 11 has an inner wall 20 which surrounds the center bore 14.

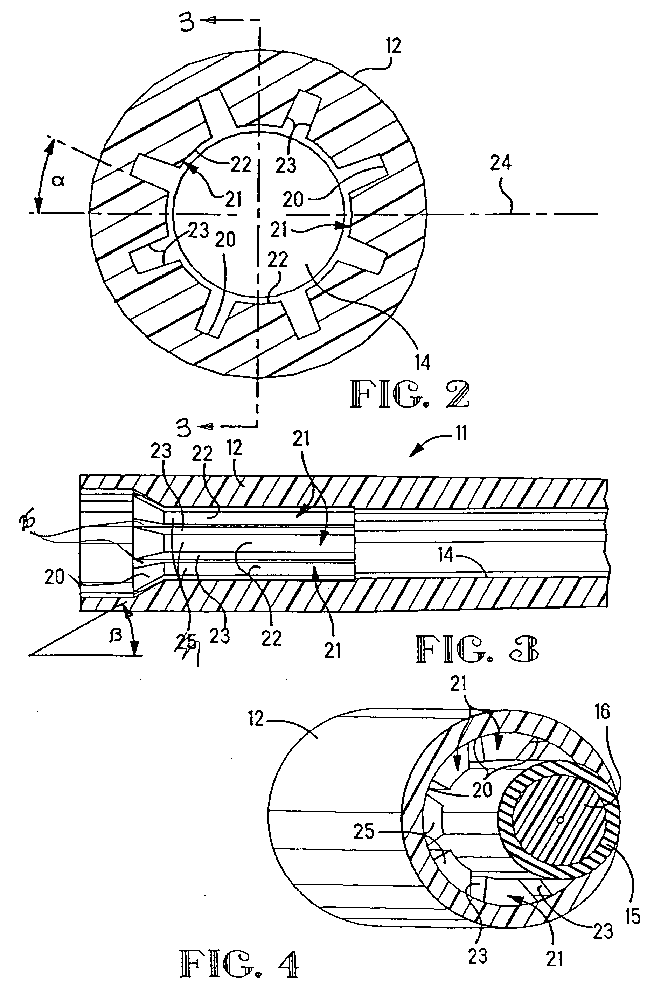

A plurality of ribs 21 are formed on the inner wall 20 of the rigid portion 12 of the body 11. The ribs 21 are spaced apart from one another and extend inwardly into the center bore 14. It is preferred that there be eight ribs 21 although a greater or a lesser number of ribs 21 may be formed. For improved gripping of the cable 15, it is preferred that pairs of ribs 21 be formed opposing one another. The choice of the number of ribs 21 is a function of the ease of manufacture of the ribs and the tooling to form the strain relief boot. Another consideration in determining the number of ribs 21 is to provide for the strain relief boot 10 to be centered geometrically on the cable 15. Each rib 21 has a top surface 22 and a pair of adjoining sidewalls 23. Each sidewall 23 extends from the top surface 22 of each rib 21 to the inner wall 20 of the rigid portion 12 of the body 11. Each rib 21 is disposed in a plane 24, the plane 24 bisects the body 11, passing through the center point of the body 11. The plane 24 also bisects the respective rib 21. Each sidewall 23 of each rib 21 is chamfered at an angle α of approximately 20°-30° with respect to the plane 24 of the respective rib 21. An angle α of 25° is preferred to obtain uniform compression on the cable 15. The top surface 22 of each rib 21 may be arcuate to more nearly conform to the cylindrical form of the cable 15 and to assure improved contact between the respective ribs 21 and the cable 15. The friction fit between the top surface 22 of the ribs 21 and the cable 15 is sufficient to retain the strain relief boot 10 on the cable 15 while permitting ease of assembly of the components. The ribe 21 are circumferentially spaced substantially parallel to one another and extend longitudinally on the inner wall 10 of the rigid portion 12 of the body 11 from near the end of the rigid portion 12 toward the flexible portion 13. Each rib 21 has a first edge 25 which is distal from the flexible portion 13 of the body 11. Each first edge 25 is tapered from the inner wall 20 toward the top surface 22 of the respective rib 21 at an angle β of approximately 30°. In this manner, when the cable 15 is slidingly disposed into the rigid portion 12 of the body 11 (FIGS. 1 and 4) the cable 15 initially contacts the tapered first ends 25 of the ribs 21 and sliding disposition of the cable 15 is facilitated.

The friction fit of the strain relief boot 10 on the cable 15 due to the contact of the cable 15 with the plurality of ribs 21, permits the removal of the strain relief boot 10 from the cable 15. When required, the mated cable 15 and strain relief boot 10 may be pulled apart without using undue force so that the members are not damaged. In this manner, the present invention provides versatility not possible with strain relief boots of the prior art which were joined with epoxy adhesive. In the event of a fire, the present invention also avoids the generation of noxious fumes produced by the combustion of epoxy adhesive.

## Claims

1. A strain relief boot (10) for a cable (15) comprising a generally tubular body having a center bore (14) therethrough, said body comprising a generally tubular rigid portion (12) coaxial with and adjacent to a generally tubular flexible portion (13), the center bore (14) of the body defining an inner wall (20) arranged to surround the cable (15) to be slidingly disposed within the center bore (14) characterized in that;
the rigid portion (12) has a plurality of elongate ribs (21) spaced apart circumferentially and protruding radially inwardly from the inner wall (20), each rib (21) extending along and being secured to the inner wall (20) along the length of the rib so as to grip the cable with a friction fit and retain the boot on the cable.

2. The strain relief boot (10) of claim 1,
wherein the ribs (21) are parallel to one another and extend longitudinally along the inner wall (20) of the rigid portion (12).

3. The strain relief boot (10) of claim 2,
wherein the ribs (21) are equally spaced.

4. The strain relief boot (10) of claim 1,
wherein the ribs (21) are disposed in pairs opposite one another.

5. The strain relief boot (10) of claim 1,
wherein sidewalls (23) of each rib (21) are chamfered at an acute angle with respect to the longitudinally bisecting plane.

6. The strain relief boot (10) of claim 5,
wherein the acute angle is approximately 20°-30°.

7. The strain relief boot (10) of claim 6,
wherein the acute angle is 25°.

8. The strain relief boot (10) of claim 1,
wherein each elongate rib (21) has its edge portion (25) distal from the flexible portion (13) which is tapered at an acute angle from the inner wall (20) toward a top surface (22) of the respective rib, wherein sliding disposition of the cable into the strain relief boot is facilitated.

9. The strain relief boot of claim 8, wherein, the acute angle is approximately 30°.

10. The strain relief boot of claim 1, wherein a top surface (22) of each rib (21) is arcuate in the circumferential direction.

## Patentansprüche

1. Entlastungsschutzkappe (10) für ein Kabel (15), die einen im allgemeinen rohrförmigen Körper aufweist, der durchgehend eine mittige Bohrung (14) aufweist, wobei der Körper einen im allgemeinen rohrförmigen, starren Abschnitt (12) koaxial mit und angrenzend an einen im allgemeinen rohrförmigen, elastischen Abschnitt (13) aufweist, wobei die mittige Bohrung (14) des Körpers eine Innenwand (20) begrenzt, die so angeordnet ist, daß sie das Kabel (15) umgibt, das verschiebbar innerhalb der mittigen Bohrung (14) angeordnet ist, dadurch gekennzeichnet, daß:
der starre Abschnitt (12) eine Vielzahl von länglichen Rippen (21) aufweist, die am Umfang mit Abstand angeordnet sind und radial nach innen aus der Innenwand (20) heraus vorstehen, daß sich jede Rippe (21) längs der Innenwand (20) erstreckt und an der Innenwand längs der Länge der Rippe so gesichert wird, daß das Kabel durch einen Reibsitz erfaßt und die Schutzkappe auf dem Kabel festgehalten wird.

2. Entlastungsschutzkappe (10) nach Anspruch 1, bei der die Rippen (21) parallel zueinander verlaufen und sich in Längsrichtung entlang der Innenwand (20) des starren Abschnittes (12) erstrecken.

3. Entlastungsschutzkappe (10) nach Anspruch 2, bei der die Rippen (21) einen gleichen Abstand aufweisen.

4. Entlastungsschutzkappe (10) nach Anspruch 1, bei der die Rippen (21) in Paaren angeordnet sind, die einander gegenüberliegen.

5. Entlastungsschutzkappe (10) nach Anspruch 1, bei der die Seitenwände (23) einer jeden Rippe (21) unter einem spitzen Winkel mit Bezugnahme auf die sich in Längsrichtung halbierende Ebene abgeschrägt sind.

6. Entlastungsschutzkappe (10) nach Anspruch 5, bei der der spitze Winkel annähernd 20 bis 30° beträgt.

7. Entlastungsschutzkappe (10) nach Anspruch 6, bei der der spitze Winkel 25° beträgt.

8. Entlastungsschutzkappe (10) nach Anspruch 1, bei der jede längliche Rippe (21) einen Randabschnitt (25) distal vom elastischen Abschnitt (13) aufweist, der unter einem spitzen Winkel von der Innenwand (20) zu einer oberen Fläche (22) der entsprechenden Rippe hin konisch ist, worin die verschiebbare Anordnung des Kabels in die Entlastungsschutzkappe hinein erleichtert wird.

9. Entlastungsschutzkappe nach Anspruch 8, bei der der spitze Winkel annähernd 30° beträgt.

10. Entlastungsschutzkappe nach Anspruch 1, bei der eine obere Fläche (22) einer jeden Rippe (21) in der Umfangsrichtung bogenförmig ist.

## Revendications

1. Gaine serre-câble (10) pour un câble (15), comprenant un corps généralement tubulaire avec un alésage central (14) qui le traverse, ledit corps comprenant une partie rigide généralement tubulaire (12), coaxiale et adjacente à une partie flexible généralement tubulaire (13), l'alésage central (14) du corps définissant une paroi interne (20), agencée de sorte à entourer le câble (15), destiné à être agencé par glissement dans l'alésage central (14), caractérisée en ce que:
la partie rigide (12) comporte plusieurs nervures allongées (21), espacées circonférentiellement et débordant radialement vers l'intérieur de la paroi interne (20), chaque nervure (21) s'étendant le long de la paroi interne (20) et étant fixée à celle-ci, le long de la longueur de la nervure, de sorte à serrer le câble par un ajustement à friction et à retenir la gaine sur le câble.

2. Gaine serre-câble (10) selon la revendication 1, dans laquelle les nervures (21) sont parallèles les unes aux autres et s'étendent longitudinalement le long de la paroi interne (20) de la partie rigide (12).

3. Gaine serre-câble (10) selon la revendication 2, dans laquelle les nervures (21) sont espacées de façon égale.

4. Gaine serre-câble (10) selon la revendication 1, dans laquelle les nervures (21) sont agencées par paires, opposées les unes aux autres.

5. Gaine serre-câble (10) selon la revendication 1, dans laquelle les parois latérales (23) de chaque nervure (21) sont chanfreinées à un angle aigu par rapport au plan bissecteur dans le sens longitudinal.

6. Gaine serre-câble (10) selon la revendication 5, dans laquelle l'angle aigu est de l'ordre de 20° à 30°.

7. Gaine serre-câble (10) selon la revendication 6, dans laquelle l'angle aigu est de 25°.

8. Gaine serre-câble (10) selon la revendication 1, dans laquelle chaque nervure allongée (21) comporte une partie de bordure (25) distale par rapport à la partie flexible (13), qui est effilée à un angle aigu, de la paroi interne (20) vers une surface supérieure (22) de la nervure respective, l'agencement par glissement du câble dans la gaine serre-câble étant ainsi facilité.

9. Gaine serre-câble (10) selon la revendication 8, dans laquelle l'angle aigu est de l'ordre de 30°.

10. Gaine serre-câble (10) selon la revendication 1, dans laquelle une surface supérieure (22) de chaque nervure (21) est arquée dans la direction circonférentielle.
